# EUROPEAN PATENT APPLICATION

(11) **EP 4 360 818 A1**
(43) Date of publication of application: **01.05.2024**
(21) Application number: 22890140.1
(22) Date of filing: 22.08.2022
(51) Int. Cl.: B25J 9/16, B25J 11/00, B25J 19/02, G06Q 10/08, B25J 5/00, G06Q 20/20

(54) **APPARATUS AND METHOD FOR SUGGESTING DESTINATION FOR DELIVERY OF ITEM**

(30) Priority: 02.11.2021 KR 20210148731; 10.11.2021 KR 20210154167
(71) Applicant: Samsung Electronics Co., Ltd., Suwon-si, Gyeonggi-do 16677 (KR)
(72) Inventor: CHOI, Yeeun, Suwon-si, Gyeonggi-do 16677 (KR); PARK, Jiwon, Suwon-si, Gyeonggi-do 16677 (KR); LEE, Joayoung, Suwon-si, Gyeonggi-do 16677 (KR); HAN, Hoon, Suwon-si, Gyeonggi-do 16677 (KR)
(74) Representative: Gulde & Partner
(86) International application number: PCT/KR2022/012509
(87) International publication number: WO 2023/080404

(57) **Abstract**

An example electronic device is configured to identify a plurality of serving destinations corresponding to order data matched with an item among one or more pieces of order data, in response to the item being on a serving tray, determine a target destination to which the item is to be provided among the plurality of serving destinations, based on time information related to delivery of an item at each of the serving destinations, and present the target destination and the remaining candidate destinations to a user of the electronic device.

## Description

### TECHNICAL FIELD

The disclosure relates to a method of presenting a destination for delivery of an item.

### BACKGROUND ART

Recently, driven by the advancement of electronics technology, various types of electronic devices have been developed and distributed. In stores, cafes, restaurants, and the like, electronic devices, such as kiosks and robots, that replace humans have been actively used. The electronic devices may perform operations, such as processing an order requested by a customer and delivering the order to a customer.

However, there has also been a constant demand for a method of efficiently delivering ordered food to satisfy many customers and providing a consistent service to many customers such that an electronic device, such as a robot, may better perform labor, thus replacing humans. A needed method may be efficiently delivering an ordered food and a service item by a few robots while satisfying many customers.

### DETAILED DESCRIPTION OF THE INVENTION

### TECHNICAL PROBLEM

Example embodiments of the disclosure may provide an electronic device configured to identify carried food and to automatically set a destination.

Example embodiments of the disclosure may provide an electronic device configured to check food and determine a priority of destinations in processing orders.

### SOLUTION TO PROBLEM

According to various example embodiments, an electronic device includes a communication module configured to receive one or more pieces of order data that indicate an item ordered by each customer; a memory configured to store computer-executable instructions; and a processor configured to execute the computer-executable instructions by accessing the memory, in which the computer-executable instructions configure the processor to control the electronic device to, in response to an item being on a serving tray, identify a plurality of serving destinations corresponding to order data matched with the item among the one or more pieces of order data, determine a target destination to which the item is to be provided among the plurality of serving destinations, based on time information related to delivery of an item, and present, to a user of the electronic device, the target destination and the remaining candidate destinations.

According to various example embodiments, a method implemented by a processor includes receiving one or more pieces of order data that indicate an item ordered by each customer; in response to an item being on a serving tray, identifying a plurality of serving destinations corresponding to order data matched with the item among the one or more pieces of order data; determining a target destination to which the item is to be provided among the plurality of serving destinations, based on time information related to delivery of an item at each of the serving destinations; and presenting, to a user of the electronic device, the target destination and the remaining candidate destinations.

### ADVANTAGEOUS EFFECTS OF INVENTION

The electronic device may provide an interface that enables convenient food checking interoperating with a current serving history during order processing.

The electronic device may reduce a setting operation of a task indicator (e.g., a user) and provide easy correction and checking of serving information through a user interface.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an example electronic device in a network environment according to various example embodiments;
FIG. 2 is a diagram illustrating an example electronic device implemented as a serving robot according to various example embodiments;
FIG. 3 is a flowchart illustrating an example method of presenting a serving destination, according to various example embodiments;
FIGS. 4 and 5 are flowcharts illustrating example operations performed by a serving robot and a server, according to various example embodiments;
FIG. 6 is a diagram illustrating an example operation of setting a priority of delivery standard elements, according to various example embodiments;
FIG. 7 is a flowchart illustrating an example operation of applying delivery standard elements by restaurant A illustrated in FIG. 6, according to various example embodiments;
FIG. 8 is a flowchart illustrating an example operation of applying delivery standard elements by restaurant B illustrated in FIG. 6, according to various example embodiments;
FIG. 9 is a flowchart illustrating an example operation of applying delivery standard elements by restaurant C illustrated in FIG. 6, according to various example embodiments;
FIG. 10 is a flowchart illustrating an example operation of applying delivery standard elements by restaurant D illustrated in FIG. 6, according to various example embodiments;
FIG. 11 is a diagram illustrating an output of an example order form of order data and an output of a serving destination, according to various example embodiments;
FIG. 12 is a diagram illustrating an example operation of updating order data upon serving, according to various example embodiments;
FIG. 13 is a diagram illustrating an example operation of determining and changing a serving destination, according to various example embodiments;
FIG. 14 is a diagram illustrating an example operation of displaying a serving history in an order form, according to various example embodiments;
FIG. 15 is a diagram illustrating an example serving status according to various example embodiments;
FIG. 16 is a diagram illustrating an example operation of providing a suggestion when completing serving, according to various example embodiments;
FIG. 17 is a diagram illustrating an example operation of recommending an item, according to various example embodiments;
FIG. 18 is a diagram illustrating an example operation of delivering an item by accessing a customer who has ordered the item at a destination, according to various example embodiments;
FIG. 19 is a diagram illustrating an example operation of grouping items and delivering the grouped items, according to various example embodiments; and
FIG. 20 is a diagram illustrating an example operation of adjusting an application sequence of delivery standard elements, according to various example embodiments.

### BEST MODE FOR CARRYING OUT THE INVENTION

Hereinafter, example embodiments will be described in detail with reference to the accompanying drawings. When describing the example embodiments with reference to the accompanying drawings, like reference numerals refer to like elements and a repeated description related thereto will be omitted.

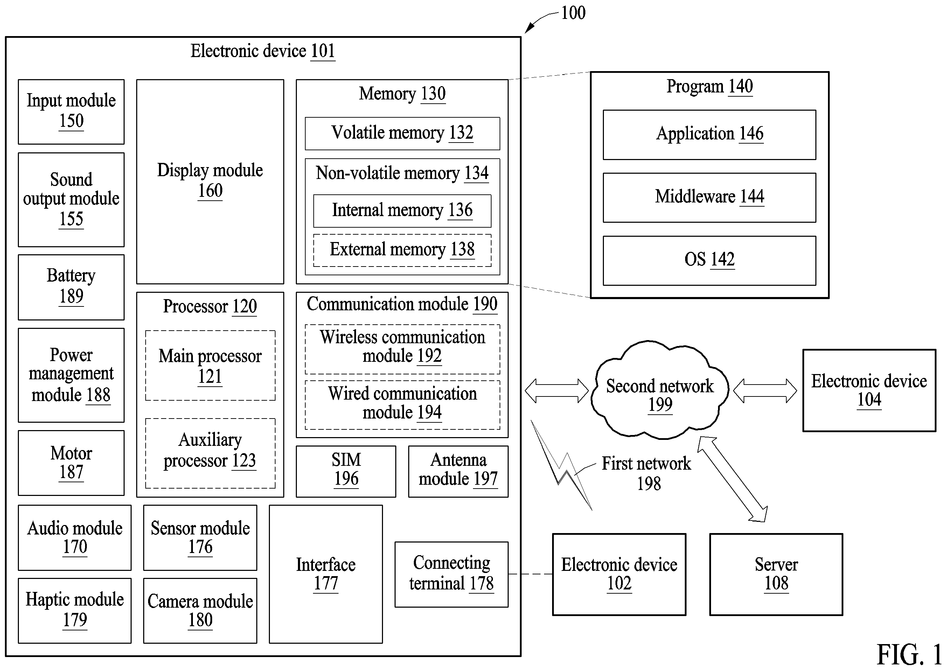

FIG. 1 is a block diagram illustrating an electronic device 101 in a network environment 100 according to various example embodiments. Referring to FIG. 1, the electronic device 101 in the network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an example embodiment, the electronic device 101 may communicate with the electronic device 104 via the server 108. According to an example embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a motor 187, a power management module 188, a battery 189, a communication module 190, a subscriber identification module (SIM) 196, or an antenna module 197. In various example embodiments, at least one of the components (e.g., the connecting terminal 178) may be omitted from the electronic device 101, or one or more other components may be added to the electronic device 101. In various example embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an example embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an example embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an example embodiment, the auxiliary processor 123 (e.g., an ISP or a CP) may be implemented as a portion of another component (e.g., the camera module 180 or the communication module 190) that is functionally related to the auxiliary processor 123. According to an example embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an example embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control its corresponding one of the display, the hologram device, and the projector. According to an example embodiment, the display module 160 may include a touch sensor adapted to detect a touch, or a pressure sensor adapted to measure the intensity of force of the touch.

The audio module 170 may convert sound into an electric signal or vice versa. According to an example embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an example embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an example embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an example embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an example embodiment, the haptic module 179 may include, for example, a motor, a piezoelectric element, or an electric stimulator.

The camera module 180 may capture a still image and moving images. According to an example embodiment, the camera module 180 may include one or more lenses, image sensors, ISPs, and flashes.

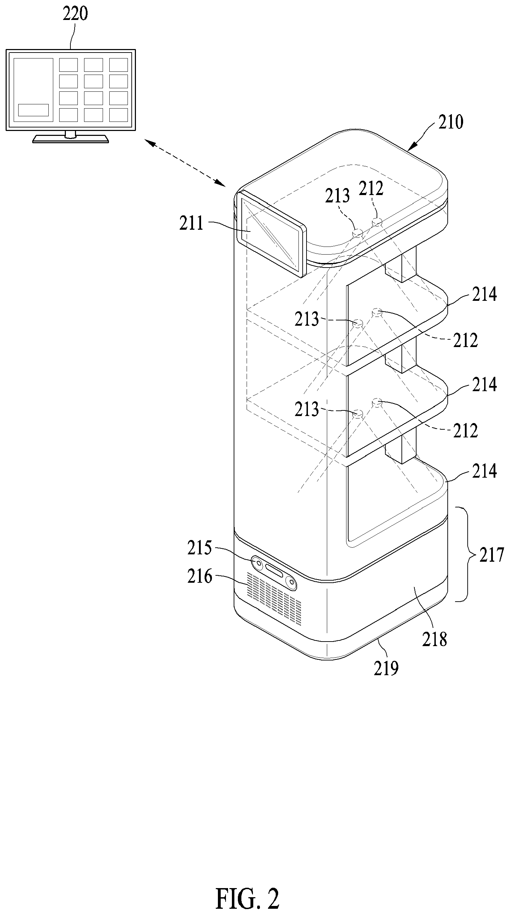

A driving module may drive the electronic device 101. The driving module may include the motor 187 and a wheel connected to the motor 187. In FIG. 2 to be described below, illustrated is an example of a pair of wheels spaced and disposed along an axis (e.g., a lateral axis) perpendicular to a driving direction (e.g., a longitudinal axis) at a bottom center of the electronic device 101, but examples are not limited thereto. The disposition and number of wheels of the motor 187 of the driving module may vary depending on a design.

The power management module 188 may manage power supplied to the electronic device 101. According to an example embodiment, the power management module 188 may be implemented as, for example, at least a part of a power management integrated circuit (PMIC).

The battery 189 may supply power to at least one component of the electronic device 101. According to an example embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an example embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an example embodiment, the antenna module 197 may include an antenna including a radiating element including a conductive material or a conductive pattern formed in or on a substrate (e.g., a printed circuit board (PCB)). According to an example embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an example embodiment, another component (e.g., a radio frequency integrated circuit (RFIC)) other than the radiating element may be additionally formed as a part of the antenna module 197.

According to various example embodiments, the antenna module 197 may form a mmWave antenna module. According to an example embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device (e.g., the electronic device 104) via the server 108 coupled with the second network 199. Each of the external electronic devices (e.g., the electronic device 102 or 104) may be a device of the same type as or a different type from the electronic device 101. According to an example embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an example embodiment, the external electronic device (e.g., the electronic device 104) may include an Internet-of-things (IoT) device. The server 108 may be an intelligent server using machine learning and/or a neural network. According to an example embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

The electronic device according to various example embodiments may be one of various types of electronic devices. The electronic device may include, for example, a portable communication device (e.g., a smartphone), a computer device, a portable multimedia device, a portable medical device, a camera, a wearable device, a home appliance device, or the like. According to an example embodiment of the disclosure, the electronic device is not limited to those described above.

It should be understood that various example embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., by wire), wirelessly, or via a third element.

As used in connection with various example embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an example embodiment, the module may be implemented in a form of an application-specific integrated circuit (ASIC).

Various example embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" storage medium is a tangible device, and may not include a signal (e.g., an electromagnetic wave), but this term does not differentiate between where data is semi-permanently stored in the storage medium and where the data is temporarily stored in the storage medium.

According to an example embodiment, a method according to various example embodiments of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}₎, or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to various example embodiments, each component (e.g., a module or a program) of the above-described components may include a single entity or multiple entities, and some of the multiple entities may be separately disposed in different components. According to various example embodiments, one or more of the above-described components may be omitted, or one or more other components may be added. Alternatively or additionally, a plurality of components (e.g., modules or programs) may be integrated into a single component. In such a case, according to various example embodiments, the integrated component may still perform one or more functions of each of the plurality of components in the same or similar manner as they are performed by a corresponding one of the plurality of components before the integration. According to various example embodiments, operations performed by the module, the program, or another component may be carried out sequentially, in parallel, repeatedly, or heuristically, or one or more of the operations may be executed in a different order or omitted, or one or more other operations may be added.

FIG. 2 is a diagram illustrating an example electronic device implemented as a serving robot according to various example embodiments.

An electronic device 210 (e.g., the electronic device 101 of FIG. 1) may be implemented as a serving robot, as illustrated in FIG. 2. For example, the electronic device 101 may be a public mobile robot, which is a serving robot configured to autonomously drive and visit a plurality of destinations (e.g., tables). The electronic device 210 may establish communication with an order server 220 (e.g., the server 108 of FIG. 1) and receive, from the order server 220, information related to orders of customers of the plurality of destinations.

The order server 220 may manage order information of each destination. For example, the order server 220 may correct order information (e.g., point-of-sale (POS) data) on a customer of each destination from the electronic device 210 and/or an external device (e.g., a mobile terminal of the customer, a tablet terminal of an employee, and a kiosk terminal). The order information may include seating information, order receiving information, ordered menu information, and serving information. Seating information of each destination may include identification information (e.g., a table number) of the destination, whether a customer sits in the destination, and the number of seated customers. Order receiving information of each destination may include whether a customer seated in the destination places an order and a time of the order. Ordered menu information of each destination may include a type of an item ordered by a seated customer at the destination and the number of ordered items. Serving information of each destination may include whether serving of each item ordered from each destination has been completed. In addition, the order information may include a side item (e.g., a side menu) accompanying an ordered main item (e.g., a main dish), a special order (e.g., whether additional tableware is needed), additional food, whether a customer is a reserved customer, the number of visits of the customer, and whether the customer is a very-important-person (VIP) customer.

The electronic device 210 may include a display module 211 (e.g., the display module 160 of FIG. 1), a camera module 212 (e.g., the camera module 180 of FIG. 1), a lighting module 213, a serving tray 214, a sensor module 215 (e.g., the sensor module 176 of FIG. 1), a sound output module 216 (e.g., the sound output module 155 of FIG. 1), a communication module 218 (e.g., the communication module 190 of FIG. 1) (e.g., including communication circuitry), and a driver 219 (e.g., the motor 187 of FIG. 1). In FIG. 2, the sensor module 215, the sound output module 216, the communication module 218, and the driver 219 are illustrated as being included in a base driving platform 217, but examples are not limited thereto. The base driving platform 217 may further include a battery (e.g., the battery 189 of FIG. 1) and a power management module (e.g., the power management module 188 of FIG. 1).

The display module 211 may visually output information related to item delivery to at least one of a user and a customer. For example, the display module 211 may output visual information (e.g., text and an image) that guides an item to be delivered to a destination where the electronic device 210 reaches.

In addition, the electronic device 210 may further include an input module (e.g., the input module 150 of FIG. 1) integrated with the display module 211. The electronic device 210, through the input module, may receive at least one of a touch input and a voice input from at least one of a user and a customer.

The camera module 212 (e.g., including a camera) may be disposed to face each serving tray (e.g., a serving tray 214). For example, in FIG. 2, the camera module 212 may face a serving tray from the ceiling facing the serving tray. In other words, the camera module 212 may have a viewing angle for capturing the serving tray. The camera module 212 may capture an image including an item (e.g., food) disposed on the serving tray. A processor (e.g., the processor 120 of FIG. 1) of the electronic device 210, based on an image captured by the camera module 212, may recognize a type (e.g., a food type) of item disposed on each serving tray and the number (e.g., the number of food items) of items.

The lighting module 213 may be a module for projecting light toward a serving tray. The lighting module 213, when the electronic device 210 reaches a target destination to which a target item disposed on a serving tray needs to be delivered, may light the serving tray and the target item disposed on the serving tray.

Each serving tray (e.g., the serving tray 214) may be a tray for accommodating an item. In FIG. 2, three serving trays are illustrated as being spaced in a direction perpendicular to the ground, but the number and structure of the serving trays is not be limited thereto and may vary depending on a design. At least one serving tray may be disposed along the same plane as another serving tray. The electronic device 210 may include one or more serving trays (e.g., the serving tray 214).

The sensor module 215 may include a sensor for use in driving the electronic device 210. For example, the sensor module 215 may include one or a combination of two or more of a light detection and ranging (LiDAR) sensor, a depth sensor (e.g., a time-of-flight (TOF) sensor), and an ultrasonic sensor. The electronic device 210, through the sensor module 215, may set a driving route by detecting an object and a background around the electronic device 210 and perform a maneuver for avoiding an obstacle.

The sound output module 216 may output, to a customer, a sound signal (e.g., voice guidance) that indicates information (e.g., the name and number of a currently delivered item) related to item delivery. The sound output module 216 may record a sound signal (e.g., guidance to a customer) to be provided from a user to the customer and a sound signal (e.g., a request from the customer) to be provided from the customer to the user. In FIG. 2, for example, a speaker of the sound output module 216 is illustrated as being at a lower part of the electronic device 210 and a microphone of the sound output module 216 may be integrated with the display module 211.

The communication module 218 (e.g., including communication circuitry) may establish wired or wireless communication with the order server 220. For example, the communication module 218 may receive POS (point-of-sale) data from the order server 220. The POS data may include one or more pieces of order data that indicate an item ordered by each customer. The item, for example, may include food items and things. The communication module 218, when delivery of a target item has been completed by the electronic device 210, may report the completed delivery of the target item (e.g., served food) to the order server 220. In addition, the communication module 218 may establish communication with another terminal (e.g., a wearable device) of a user other than the order server 220. The communication module 218 may transfer an anomaly detected by the electronic device 210 to the other terminal of the user.

The driver 219 may move the electronic device 210. The driver 219 may include a motor and wheels. The driver 219 may move the electronic device 210 forward and backward and rotate the electronic device 210 on the ground by driving the motor.

The electronic device 210 may simultaneously serve prepared items (e.g., simultaneously cooked food items) in a service space (e.g., a restaurant) to multiple destinations (e.g., multiple tables) in one drive. For reference, an example of the electronic device 210, in which an item is disposed visiting one target destination is mainly described herein, but examples are not limited thereto. When the electronic device 210 visits a plurality of destinations, the electronic device 210 may visit the destinations in a serving sequence by identifying an item disposed on each serving tray.

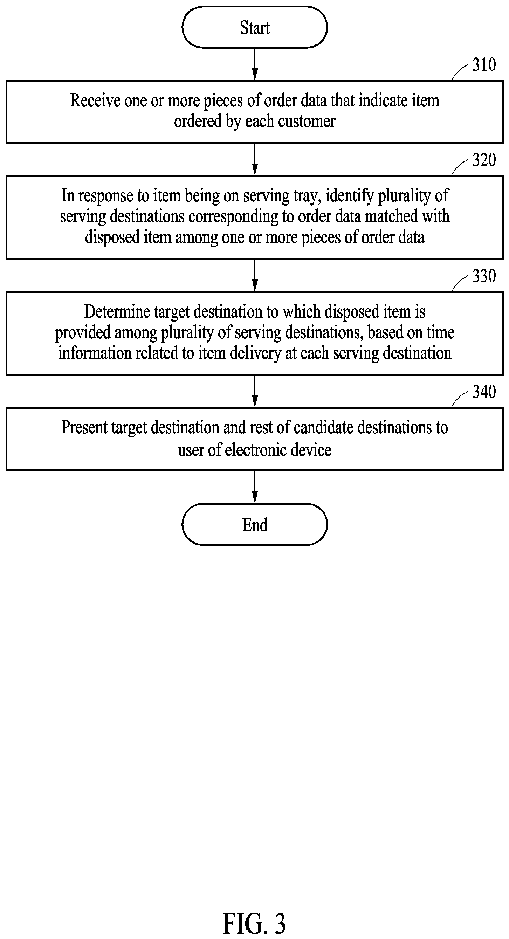

FIG. 3 is a flowchart illustrating an example method of presenting a serving destination, according to various example embodiments.

In operation 310, an electronic device (e.g., the electronic device 210 or the order server 220 of FIG. 2) may receive one or more pieces of order data that indicates an item ordered by each customer.

In operation 320, the electronic device, in response to an item being on a serving tray, may identify a plurality of serving destinations corresponding to order data matched with the item among the one or more pieces of order data.

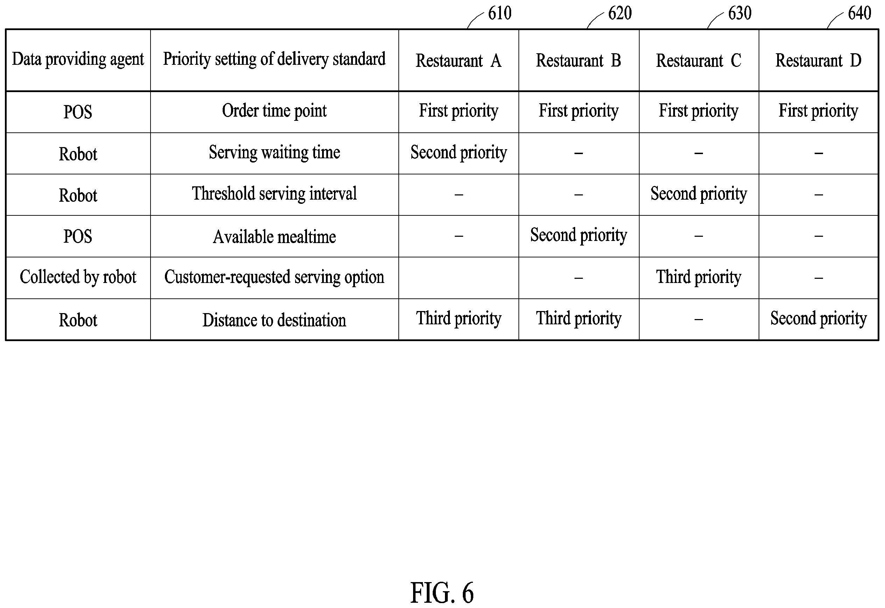

In operation 330, the electronic device may determine a target destination to which the item is to be provided among the plurality of serving destinations, based on time information related to delivery of an item at each of the serving destinations. The time information related to delivery of an item may include one or a combination of two or more of an item order time point, a serving waiting time, a threshold serving interval, and an available mealtime. However, information to be used when the electronic device determines the target destination is not be limited to the time information, but distance information and a serving option requested by a customer may also be used. Delivery standard elements including the time information, the distance information, and the serving option are described below with reference to FIG. 6.

In operation 340, the electronic device may present, to a user of the electronic device, the target destination and the remaining candidate destinations. The electronic device, instead of initiating driving to the determined target destination right away, may request the user's confirmation by presenting the determined target destination and the remaining candidate destinations to the user (e.g., an employee). The electronic device may thereafter drive itself to deliver an item to the target destination confirmed or changed by the user.

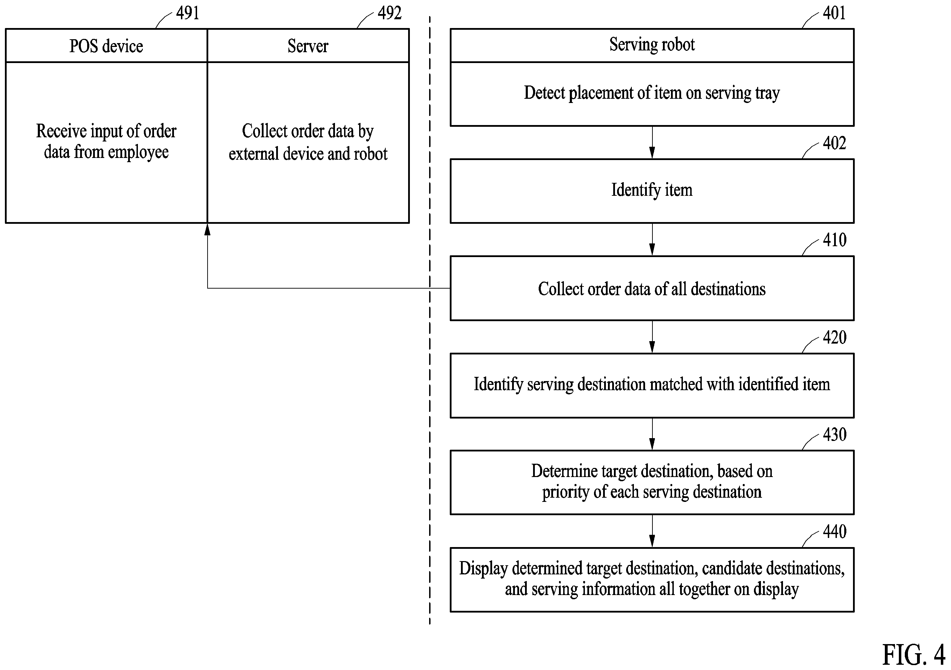

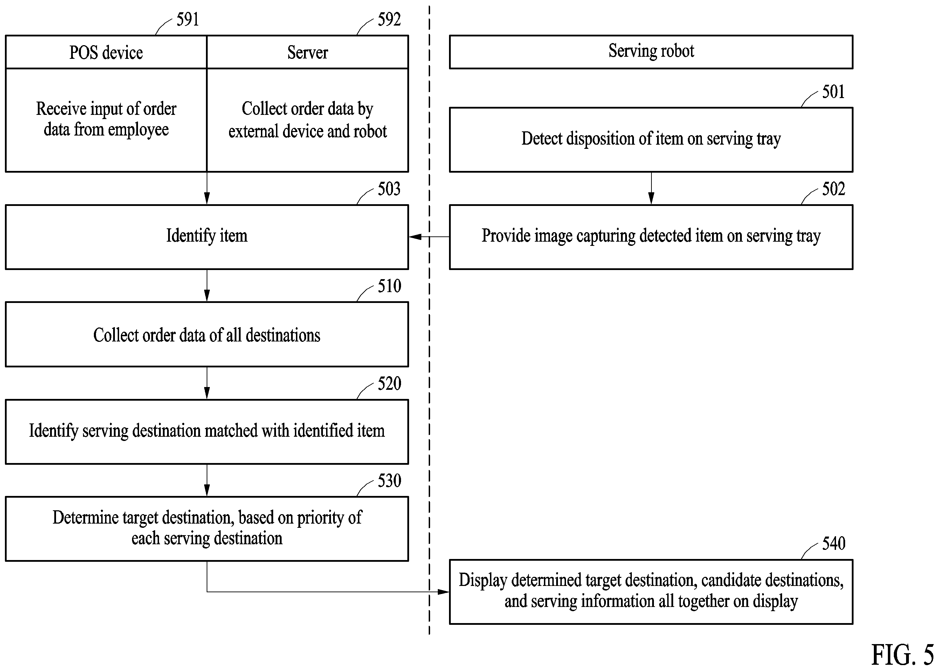

For reference, the electronic device may be implemented as a serving robot, but may also be implemented as a server for remotely controlling a serving robot. Operations performed by the serving robot and the server are described below with reference to FIGS. 4 and 5.

FIGS. 4 and 5 are flowcharts illustrating example operations performed by a serving robot and a server, according to various example embodiments.

FIG. 4 illustrates an example of an operation of an electronic device implemented as a serving robot.

For example, in operation 401, the electronic device (e.g., the serving robot) may detect disposition (placement) of an item on a serving tray. For example, the electronic device may capture the top surface of the serving tray through a camera module and sense whether the item is disposed. In operation 402, the electronic device, in response to detecting the disposition of the item on the serving tray, may identify the item through an image of the disposed item. The electronic device may identify the item by performing vision recognition on the image capturing the item disposed on the serving tray. For example, the electronic device may recognize the type and number of items.

In operation 410, the electronic device may collect order data from all destinations. The electronic device may collect the order data, based on one or a combination of two or more of a POS device, an external device, and an input module. For example, in operation 491, the POS device may receive an input of order data from an employee (e.g., a user). The employee, through a manual input to the POS device, may generate order data (e.g., the number of customers at a destination, a destination identifier, an ordered item, an ordered quantity, and a requested serving option) including information that indicates an item ordered by a customer. In operation 492, a server may collect order data from an external device and the serving robot (e.g., the electronic device). The external device may include a customer's mobile device, an in-store kiosk terminal, or a tablet terminal of an employee (e.g., a user). The electronic device, as described above, may collect, by accessing the server, order data from all tables and recent delivery information (e.g., the name and quantity of served items to each destination and a served time point). In addition, the electronic device implemented as a serving robot may directly receive an input of an order from a customer through an input module (e.g., including input circuitry), based on a touch input and a voice input.

For reference, all the destinations herein may be destinations physically accessible by the electronic device implemented as a serving robot.

In operation 420, the electronic device may identify a serving destination matched with the identified item. The serving destination may represent a destination to which the identified item needs to be delivered and/or served. The electronic device may compare an item ordered from each destination with identification information (e.g., the name or identifier of food) of an item and select a destination from which the item matched with the identification information is ordered as the serving destination.

In operation 430, the electronic device may determine a target destination based on the priority of each serving destination. The electronic device may determine the target destination to which an item needs to be delivered preferentially among serving destinations, based on delivery standard elements applied differently in each service space. The electronic device may determine a driving route to the target destination in a service space.

In operation 440, the electronic device may display the determined target destination, candidate destinations, and serving information all together on a display module. The serving information may refer, for example, to information representing a delivery situation of an item disposed in the electronic device and may include, for example, identification information (e.g., a name and an identification number) of an identified item, a serving tray on which a current item is disposed, a target destination (e.g., the identification information and identification number of the target destination), a serving quantity, and an order history of the target destination.

FIG. 5 illustrates an example of determining a target destination by an electronic device implemented as a server. The descriptions of operations 591 and 592 are similar to those of operations 491 and 492 provided above with reference to FIG. 4 and are thus are not repeated here.

In operation 501, a serving robot may detect disposition of an item on a serving tray. In operation 502, the serving robot may provide an image capturing the detected item on the serving tray.

In operation 503, the electronic device (e.g., the server) may receive an image including the item disposed on the serving tray from the serving robot and may identify the item from the image. For example, the electronic device may compare the received item with an item image preregistered in an item database and identify a matched item.

Operations 510, 520, and 530 may be performed by the electronic device, which is the server, different from FIG. 4. In operation 530, the electronic device may transmit a determined target destination to the serving robot. The electronic device may transmit candidate destinations and serving information together to the serving robot.

In operation 540, the serving robot may display the determined target destination, the candidate destinations, and the serving information all together on a display module.

Hereinafter, for ease of description, an example of an electronic device being implemented as a serving robot will be mainly described, but examples are not limited thereto, and unless contradictory to the foregoing example, an electronic device operating as a server may provide information on a target destination and candidate destinations to a serving robot.

FIG. 6 is a diagram illustrating an example operation of setting a priority of delivery standard elements, according to various example embodiments.

An electronic device (e.g., the electronic device 101 of FIG. 1), in response to a plurality of serving destinations being matched with a disposed item, may determine, to be a target destination, a serving destination to be preferentially visited based on delivery standard elements. FIG. 6 illustrates an example of a delivery standard table.

The delivery standard elements may include time information, distance information, and additional information. The time information may include, for example, an order time point, a serving waiting time, a threshold serving interval, and an available mealtime. The distance information may include a distance from a waiting position of the electronic device to a destination. The additional information may be a serving option (e.g., a customer-requested serving option) requested by a customer at each destination and may include, for example, a request including fast or slow serving of a food dish of a course meal.

The order time point may, for example, represent a time point when an item is ordered at each serving destination. The serving waiting time (e.g., a recent serving time) may, for example, represent a time elapsing from a time point when the electronic device (e.g., a serving robot) last visited each serving destination to a current time point. The threshold serving interval may, for example, be a threshold time interval set for the above-described serving waiting time, and the electronic device using the threshold serving interval as a delivery standard may preferentially visit a serving destination of which the serving waiting time exceeds the threshold serving interval. The available mealtime may, for example, be a remaining time during which a meal is allowed to a customer at a service space and may represent a time of subtracting a time elapsing between an entry time point and a current time point from a maximum allowable time given at the time of entry. The available mealtime may be set as a delivery standard, for example, at a restaurant (e.g., a buffet restaurant allowing a meal only for two hours and a hotel breakfast having a set service hour) in which a meal is allowed on a certain time basis. The serving option may, for example, be an additionally requested option and may include an option of providing a plurality of items included in a set menu all at once at lunchtime, an option of providing the items included in the set menu sequentially at dinnertime, and an option of providing multiple items slowly or quickly upon a customer's request. The distance to a destination may, for example, be a distance from a waiting position of the electronic device to the destination, and a serving destination of which the distance is farther than another may preferentially be set as a target destination than a serving destination of which the distance is shorter.

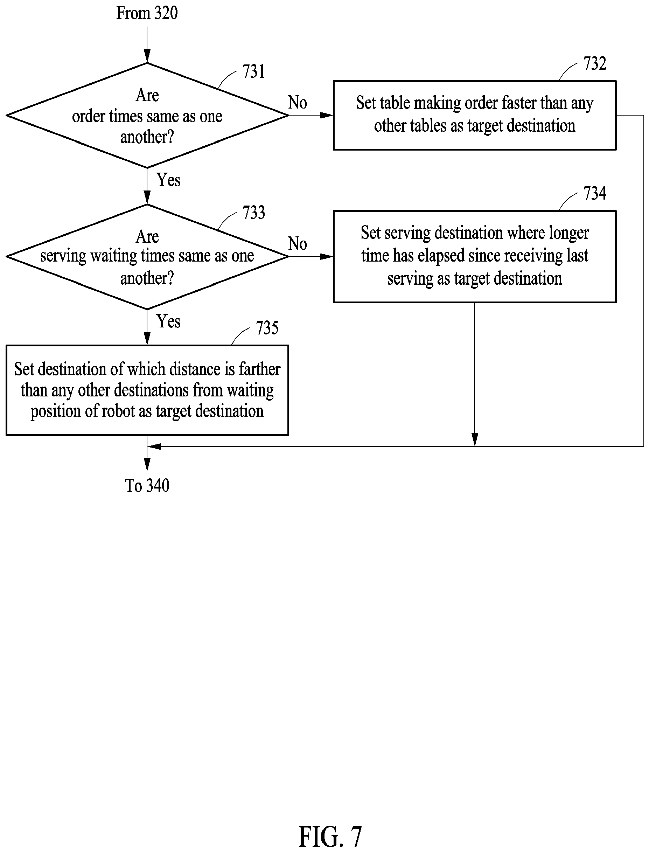

Some of the above-described delivery standard elements may be selectively applied in a different sequence in each service space. The application sequence of the delivery standard elements may vary depending on the type and operating policy of a restaurant. An application sequence 610 of restaurant A may include the order time point as a first priority, the serving waiting time as a second priority, and the distance to a destination as a third priority. An application sequence 620 of restaurant B may include the order time point as a first priority, the available mealtime as a second priority, and the distance to a destination as a third priority. An application sequence 630 of restaurant C may include the order time point as a first priority, the threshold serving interval as a second priority, and the customer-requested serving option as a third priority. An application sequence 640 of restaurant D may include the order time point as a first priority and the distance to a destination as a second priority. The application of the delivery standard elements according to the application sequences 610, 620, 630, and 640 of restaurants A, B, C, and D is individually described with reference to FIGS. 7, 8, 9, and 10.

For reference, as described later, when a user changes a target destination to another candidate destination, an electronic device may adjust a sequence of applying delivery standard elements by analyzing and reflecting delivery standard elements used in the change.

FIG. 7 is a flowchart illustrating an example operation of applying delivery standard elements by restaurant A illustrated in FIG. 6, according to an example embodiment.

Restaurant A illustrated in FIG. 7 may be a general restaurant that serves each destination multiple times. As described above with reference to FIG. 6, an electronic device (e.g., the electronic device 101 of FIG. 1) disposed in restaurant A may apply, to order data from serving destinations, an order time point as a first priority, a serving waiting time as a second priority, and a distance to a destination as a third priority.

In operation 731, the electronic device may determine whether an order time point of each destination is the same as one another. In operation 732, the electronic device, when order time points are different from one another, may set a table (e.g., a serving destination of which the order time point is the earliest) making an order before any other tables as a target destination.

In operation 733, the electronic device may determine whether serving waiting times are the same. In operation 734, the electronic device may set, as a target destination, a serving destination where a longer time has elapsed since receiving the last serving. For example, the electronic device, in response to serving waiting times, which are times elapsing from the last serving to serving destinations, being different, may determine, to be the target destination, a serving destination having the longest serving waiting time among the serving destinations.

In operation 735, the electronic device, when the serving waiting times are the same, may set, as a target destination, a destination of which the distance is farther than another from a waiting position of a serving robot.

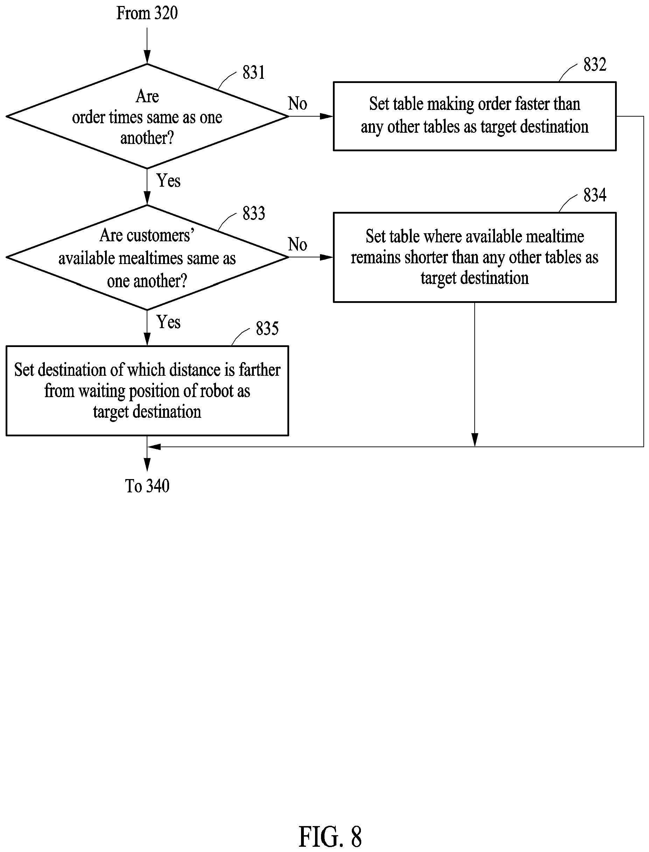

FIG. 8 is a flowchart illustrating an example operation of applying delivery standard elements by restaurant B illustrated in FIG. 6, according to an example embodiment.

Restaurant B illustrated in FIG. 8 may be a hotel buffet restaurant having set service hours. As described above with reference to FIG. 6, an electronic device (e.g., the electronic device 101 of FIG. 1) disposed in restaurant B may apply, to order data from serving destinations, an order time point as a first priority, an available mealtime as a second priority, and a distance to a destination as a third priority.

In operation 831, the electronic device may determine whether an order time point of each destination is the same as another. In operation 832, the electronic device, when order time points are different, may set a table (e.g., a serving destination of which the order time point is the earliest) making an order before any other tables as a target destination.

In operation 833, the electronic device may determine whether available mealtimes of customers at serving destinations are the same. In operation 834, the electronic device may set, as a target destination, a table where an available mealtime is shorter than any other tables. For example, the electronic device, in response to available mealtimes of serving destinations being different, may determine, to be the target destination, a serving destination having a shortest available mealtime among the serving destinations.

In operation 835, the electronic device, when the serving waiting times are the same, may set, as a target destination, a destination of which the distance is farther than another from a waiting position of a serving robot.

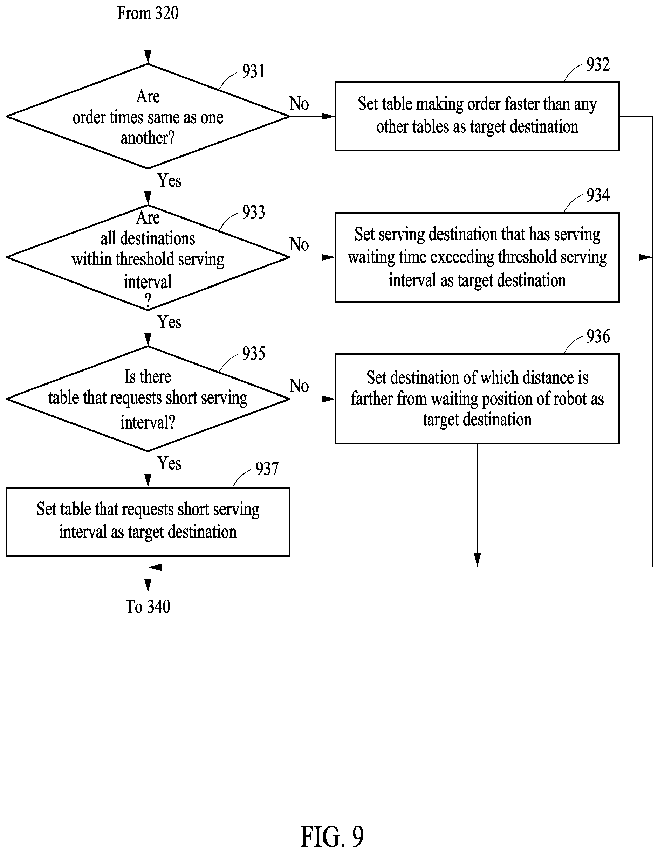

FIG. 9 is a flowchart illustrating an example operation of applying delivery standard elements by restaurant C illustrated in FIG. 6, according to an example embodiment.

Restaurant C illustrated in FIG. 9 may be a fine dining restaurant where a serving interval is adjusted for each destination. As described above with reference to FIG. 6, an electronic device (e.g., the electronic device 101 of FIG. 1) disposed in restaurant C may apply, to order data from serving destinations, an order time point as a first priority, a threshold serving interval as a second priority, and a customer-requested serving option as a third priority. In addition, a distance may be applied as a fourth priority.

In operation 931, the electronic device may determine whether an order time point of each destination is the same as another. In operation 932, the electronic device, when order time points are different, may set a table (e.g., a serving destination of which the order time point is the earliest) making an order before any other tables as a target destination.

In operation 933, the electronic device may determine whether serving waiting times of all destinations are within the threshold serving interval. In operation 934, the electronic device, when at least one serving destination has a serving waiting time exceeding the threshold serving interval, may set the serving destination as a target destination. For example, the electronic device, in response to there being a serving destination having a serving waiting time outside a threshold serving interval among the serving destinations, may determine, to be the target destination, the serving destination having the serving waiting time outside the threshold serving interval.

In operation 935, the electronic device, when the serving waiting times of all the destinations are within the threshold serving interval, may determine whether there is a table (e.g., a serving option) that requests a short serving interval. In operation 937, the electronic device may set the table that requests a short serving interval as a target destination. In operation 936, the electronic device, when there is no serving destination requesting a serving option, may set, as a target destination, a destination of which the distance is farther than another from a waiting position of a serving robot.

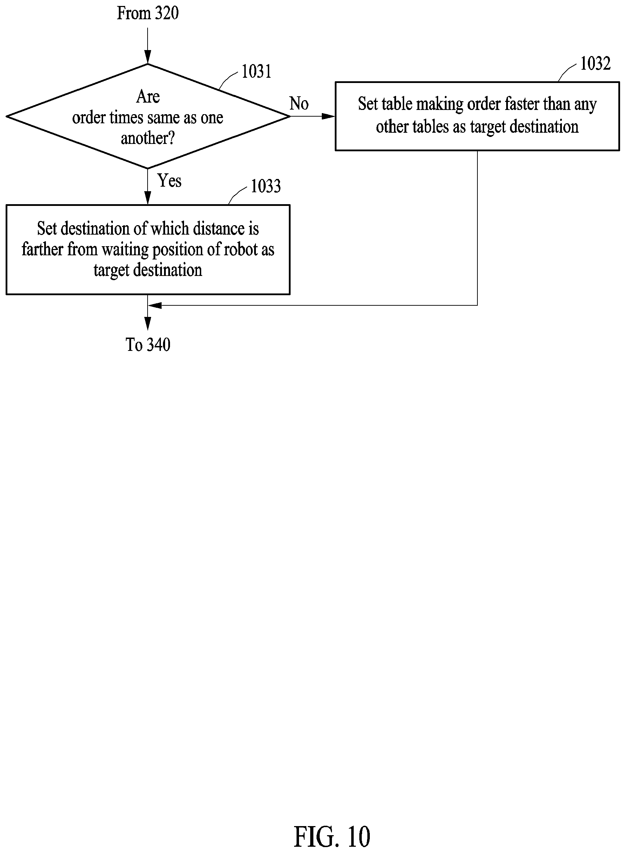

FIG. 10 is a flowchart illustrating an example operation of applying delivery standard elements by restaurant D illustrated in FIG. 6, according to an example embodiment.

Restaurant D illustrated in FIG. 10 may be a franchise restaurant that provides serving once to each destination. As described above with reference to FIG. 6, an electronic device (e.g., the electronic device 101 of FIG. 1) disposed in restaurant D may apply, to order data from serving destinations, an order time point as a first priority and a distance to a destination as a second priority.

In operation 1031, the electronic device may determine whether an order time point of each destination is the same as another. In operation 1032, the electronic device, when order time points are different, may set a table (e.g., a serving destination of which the order time point is the earliest) making an order before any other tables as a target destination. For example, the electronic device may determine, to be the target destination, a serving destination at a previous order time point between a first order time point when receiving an order for an item from a customer at a first serving destination among the plurality of serving destinations and a second order time point of a second serving destination.

In operation 1033, the electronic device, when order time points of serving destinations are the same, may set, as a target destination, a destination of which the distance is farther than another from a waiting position of a serving robot. For example, the electronic device, in response to time information (e.g., an order time point) related to delivery of an item to the plurality of serving destinations being the same, may determine, to be the target destination, a farthest serving destination from a waiting position of a serving robot configured to deliver the item among the serving destinations.

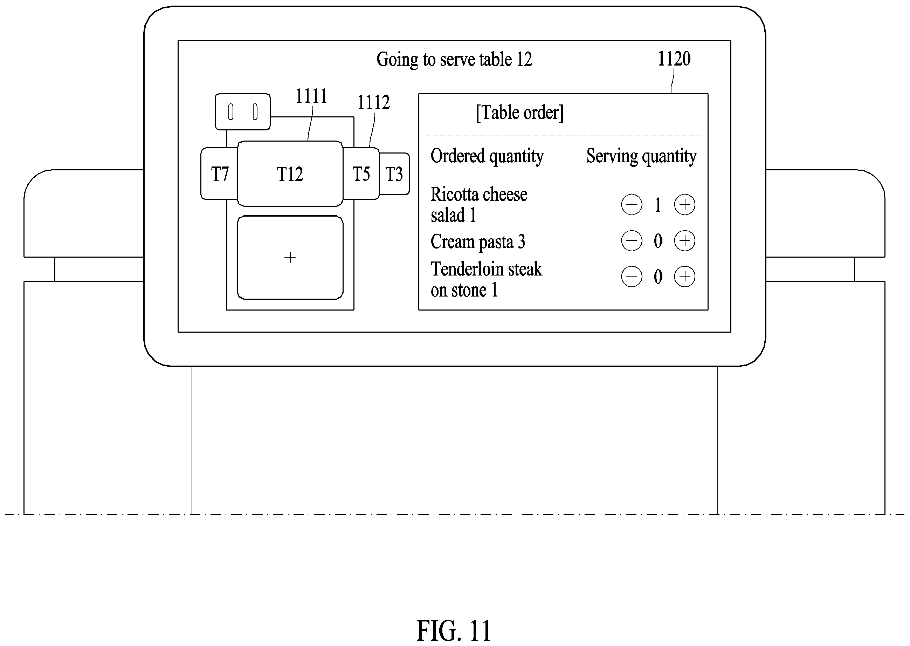

FIG. 11 is a diagram illustrating an example output of an order form of order data and an output of a serving destination, according to various example embodiments.

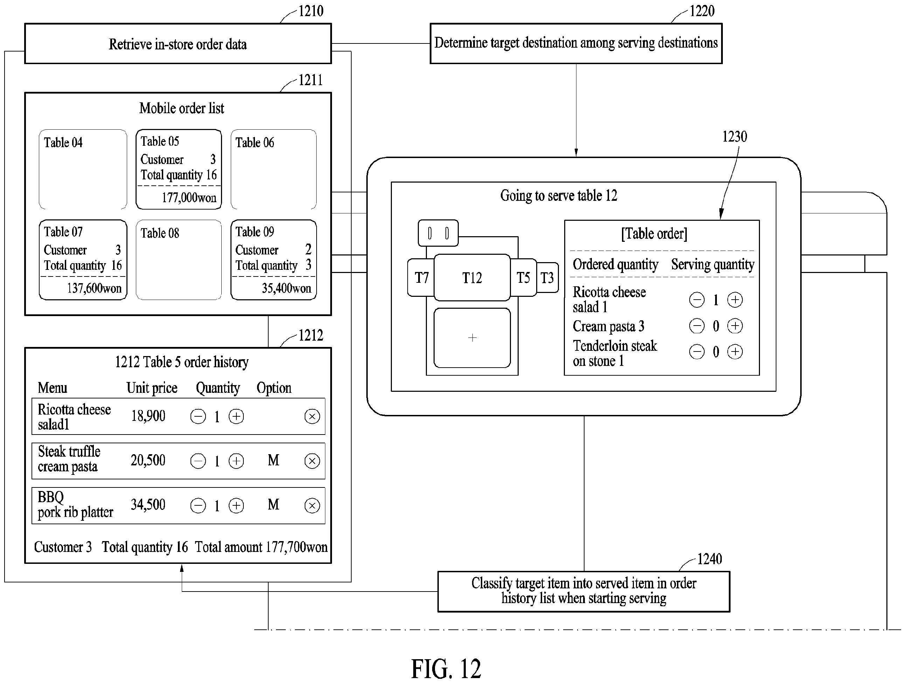

An electronic device (e.g., the electronic device 101 of FIG. 1) may output a target destination 1111, candidate destinations 1112, and serving information 1120 all together on a display module (e.g., including a display). The target destination 1111 may refer to a set destination to which the electronic device delivers an item. In FIG. 11, for example, a table 12 (e.g., T12) is set as be the target destination 1111. The candidate destinations 1112 may be other destinations that order an item to be delivered and have a lower priority than a target destination. In FIG. 11, for example, tables 7 (e.g., T7), 5 (e.g., T5), and 3 (e.g., T3) are determined to be the candidate destinations 1112. The serving information 1120 may be information representing a serving status and may be output in an order form as illustrated in FIG. 11. Serving information is described below with reference to FIG. 12.

The electronic device, in response to receiving an input on changing the target destination from a user, may change the target destination to a destination selected by the user among the remaining candidate destinations. For example, the table 12 is currently set as the target destination 1111 in FIG. 11.However, the electronic device, in response to the user's input of selecting the table 5 among the candidate destinations 1112, may change the target destination 1111 to the table 5. Accordingly, the electronic device, by displaying a determined target destination and candidate destinations all together to a user, may intuitively guide a destination to which an item needs to be delivered first and subsequent destinations to which the item is to be potentially delivered. In addition, a function of easily changing a target destination by a user may be provided through an interface (e.g., a touch interface) as illustrated in FIG. 11.

FIG. 12 is a diagram illustrating an example operation of updating order data upon serving, according to various example embodiments.

An electronic device (e.g., the electronic device 101 of FIG. 1) may retrieve in-store order data from a server in operation 1210. For example, the electronic device may receive, from the server, an order list 1211 (e.g., the number of customers, total quantity, and total payment amount of each destination) of all destinations and an order history 1212 (e.g., an ordered item, a unit price of an individual item, an item quantity, and a total payment amount) of an individual destination. The electronic device, as described above, in operation 1220, may determine a target destination among serving destinations, based on order data.

The electronic device may output, on a display, an entire order list on which a current serving situation is updated, serving information 1230 of the target destination to which an item is delivered. A serving situation may include one or a combination of two or more of an identifier of an identified item, a serving tray to which an item is assigned, a target destination of the item, a serving quantity, and an order history of the target destination. The serving information 1230 may include one or a combination of two or more of an order history, an ordered quantity, a currently served item, a current serving quantity, a serving-completed item, and a serving-completed quantity.

In operation 1240, the electronic device may classify a target item into a served item in an order history list when starting the serving of the target item. Accordingly, the electronic device may automatically perform food checking. In addition, the electronic device, as described above, by outputting the serving information 1230, may assist manual food checking by a user other than automatic food checking. The electronic device may update the in-store order data by reporting the target item classified into the served item to the server.

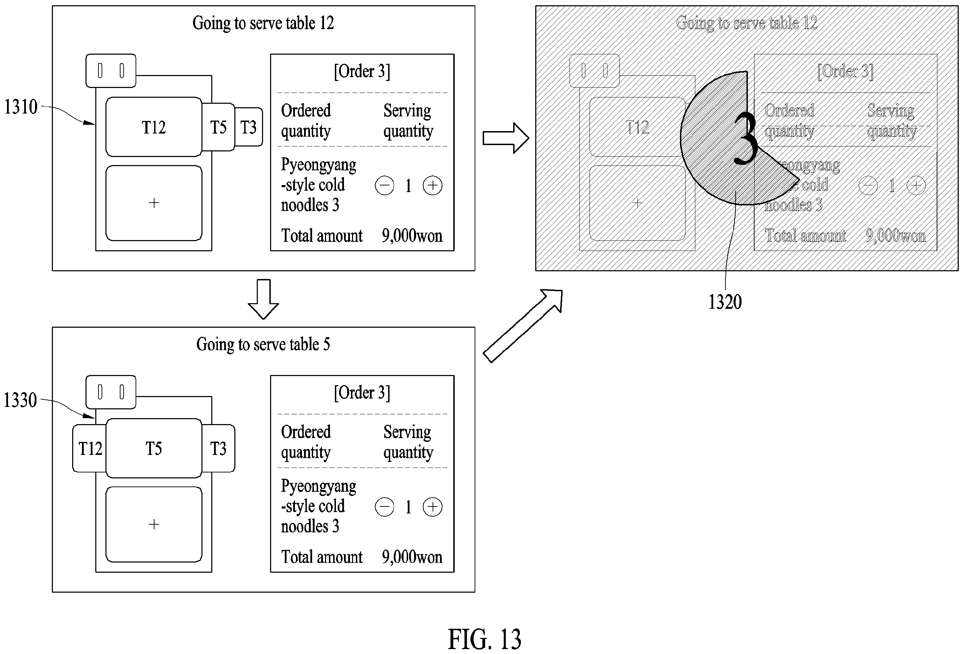

FIG. 13 is a diagram illustrating an example operation of determining and changing a serving destination, according to various example embodiments.

An electronic device (e.g., the electronic device 101 of FIG. 1), when a target destination is determined, may initiate driving to the target destination or receive an input of a destination change from a user.

For example, the electronic device may determine a table 12 to be a target destination 1310 and notify the user the initiation of item delivery to the target destination. The electronic device may output the determined target destination and possible serving candidate destinations together with serving information (e.g., an identified food and quantity) in an order form.

The electronic device, before initiating driving for item delivery, may guide to a remaining time 1320 until the driving starts. The electronic device may display served food and the remaining quantity of food items in the serving information.

The electronic device, in response to receiving an input of a destination change from the user, may change the target destination 1330 to one of the candidate destinations. For example, the electronic device may change the target destination 1330 to table 5, which has been a candidate destination in FIG. 13.

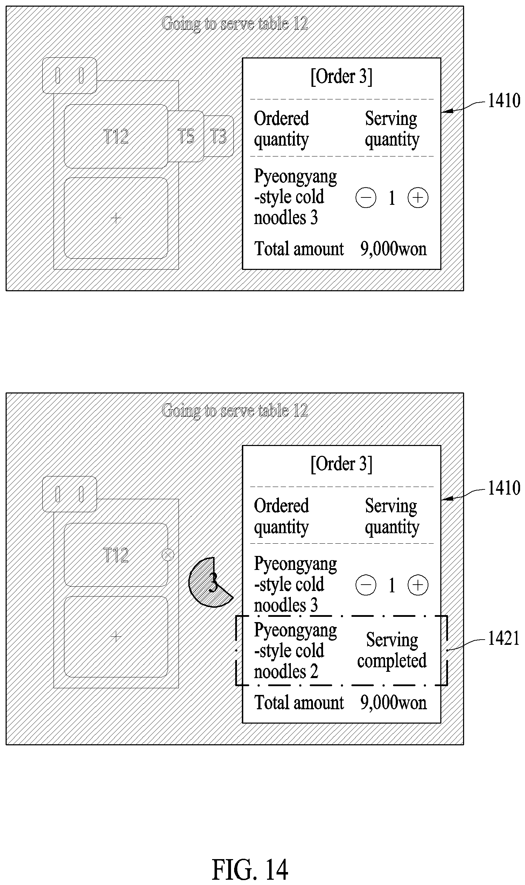

FIG. 14 is a diagram illustrating an example operation of displaying a serving history in an order form, according to various example embodiments.

An electronic device may recognize the identification information (e.g., a name) and quantity of a currently delivered item of an entire order list and may output serving information as data in an order form. Accordingly, the electronic device may show a user an item setting situation that may be determined at a glance and is easily adjustable. Serving information 1410 may represent that one in three same items ordered is waiting to be served, and the electronic device may update unserved food items to a waiting list to be served. Serving information 1420 may include information on a served item 1421. For example, the serving information 1420 illustrated in FIG. 14 may include information indicating that two in three same items have been served and one is currently waiting to be served.

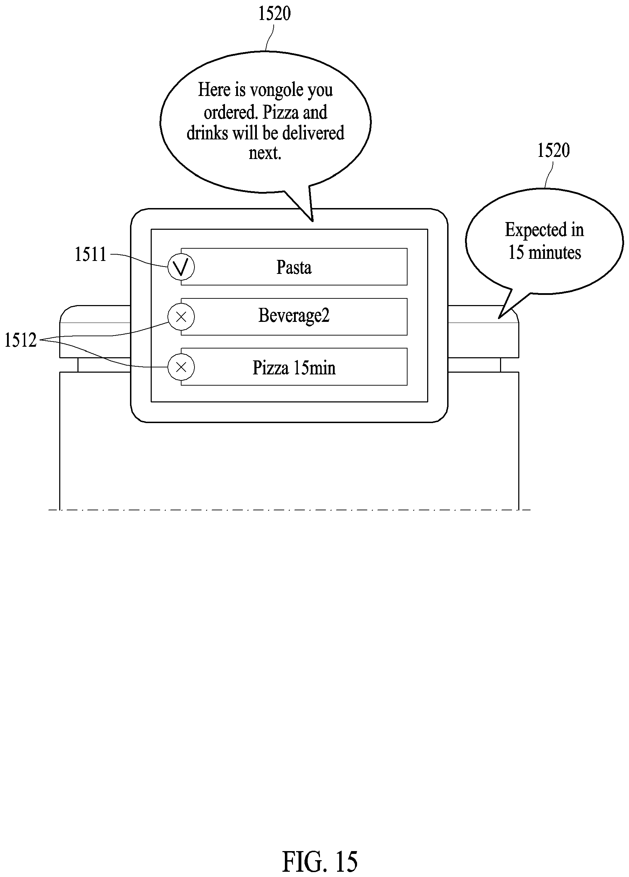

FIG. 15 is a diagram illustrating an example serving status according to various example embodiments.

An electronic device (e.g., the electronic device 101 of FIG. 1), in response to a disposed food reaching a target destination, may provide additional information to a customer who has ordered the disposed food. For example, the electronic device, in response to completed delivery of an item to a target destination, may provide first, second, and third briefing 1511, 1512, and 1520 on a serving status of another item currently being prepared to a customer at the target destination. The first, second, and third briefing 1511, 1512, and 1520 may include a description on a currently delivered item and on an expected cooking time of a next item in preparation. The electronic device may provide the first, second, and third briefing 1511, 1512, and 1520 as one or a combination of two or more pieces of visual information (e.g., a display output), auditory information (e.g., a voice utterance), and tactile information. The first briefing 1511 may represent information on a serving-completed item, and the second briefing 1512 may represent information on an item being prepared for serving.

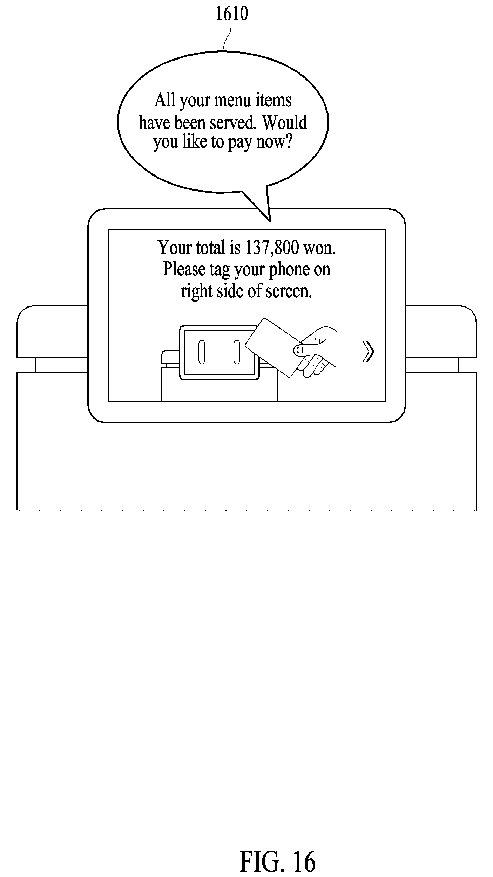

FIG. 16 is a diagram illustrating an example operation of providing a suggestion when completing serving, according to various example embodiments.

An electronic device (e.g., the electronic device 101 of FIG. 1), in response to completed delivery of all items ordered from the target destination, may provide at least one of an additional menu item suggestion or a payment request to a customer at the target destination. For example, the electronic device, when completing the serving of ordered food items, may provide an additional menu item suggestion and a payment request as one or a combination of two or more pieces of visual information, auditory information 1610 (e.g., a voice utterance), and tactile information. The additional menu item suggestion may include information on a suggestion to a customer on whether to additionally order a menu item. The payment request may include information on a request to a customer on whether to make a payment.

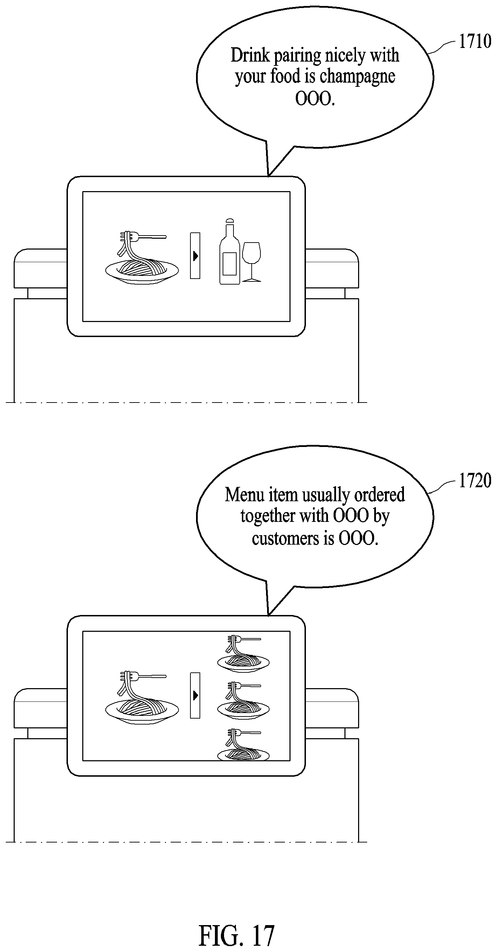

FIG. 17 is a diagram illustrating an example operation of recommending an item, according to various example embodiments.

An electronic device (e.g., the electronic device 101 of FIG. 1), in response to receiving an order for an item from a customer at a destination, may recommend another item related to the item to the customer. For example, the electronic device may recommend another item 1710 (e.g., champagne) related to an ordered item in a different category (e.g., a liquor category when the ordered item is food) from the ordered item. As another example, the electronic device may recommend yet another item 1720 that may be combined with the ordered item from the same category as the ordered item by using order statistics calculated based on an existing order data history. For example, the electronic device may recommend an item having the greatest number of orders from among items additionally ordered by other customers who have ordered the ordered item.

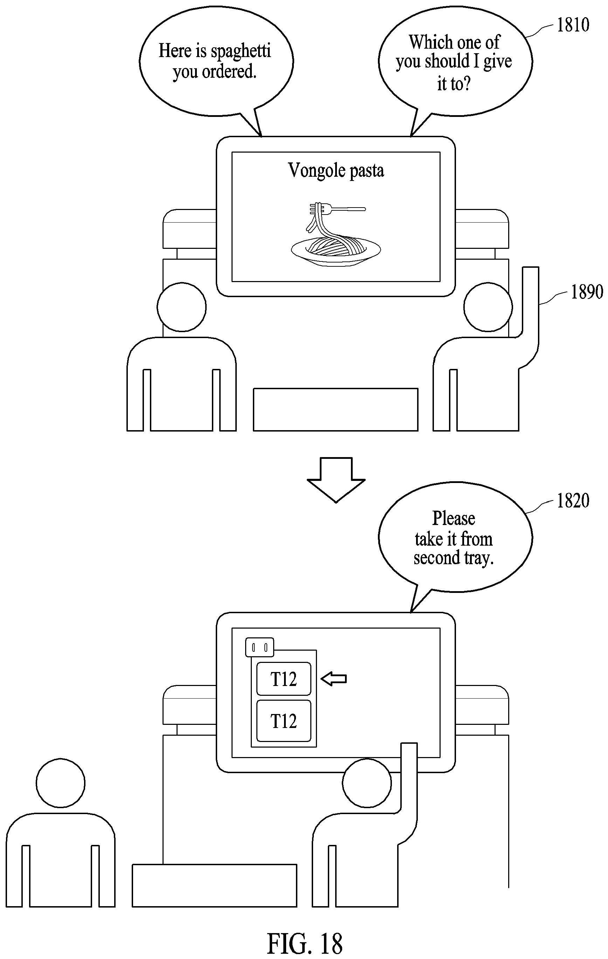

FIG. 18 is a diagram illustrating an example operation of delivering an item by accessing a customer who has ordered the item at a destination, according to various example embodiments.

An electronic device (e.g., the electronic device 101 of FIG. 1), when a plurality of customers is at a target destination, may move an item currently being delivered to a customer who ordered the item among the plurality of customers. For example, the electronic device may access a customer who has ordered a delivered item among customers at the same destination and may perform at least one of instructions of a serving tray on which the delivered item is positioned. For example, the electronic device, when the same table orders multiple menu items, may identify a customer 1890 who ordered a menu item, based on a result of identifying the ordered menu item. The electronic device may stop near the customer 1890 identified in a region corresponding to a destination. For example, the electronic device, after reaching a target destination, may output, to the customer 1890 to be served, a query 1810 as one or a combination of two or more pieces of visual information, auditory information (e.g., a voice utterance), and tactile information. The electronic device may identify the customer 1890 to be served, based on feedback (e.g., a customer's answering voice) to the query 1810.

The electronic device, in response to reaching the target destination, may guide to a serving tray on which an item ordered from the target destination is disposed. The electronic device may notify the customer 1890 of a serving tray on which the ordered menu item is disposed. For example, the electronic device may output a guide 1820 to a serving tray as one or a combination of two or more pieces of visual information (e.g., a display output), auditory information, and tactile information. In addition, the electronic device, by activating and lighting a lighting module facing a serving tray on which an item to be delivered is disposed, may intuitively guide the customer 1890 the serving tray.

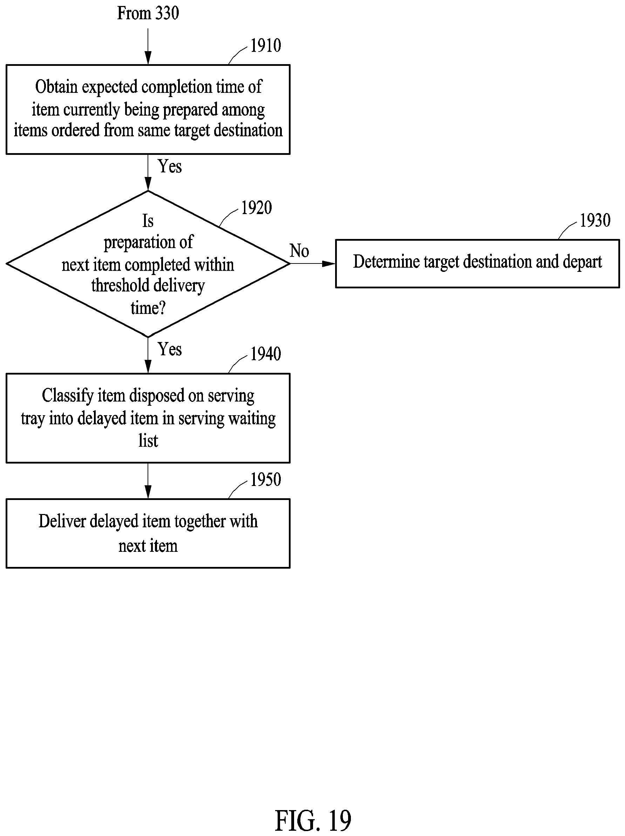

FIG. 19 is a diagram illustrating an example operation of grouping items and delivering the grouped items, according to various example embodiments.

An electronic device (e.g., the electronic device 101 of FIG. 1), when preparation completion time points of items ordered from a destination where an item has been served are close to each other, may group the items and deliver the grouped items together. The electronic device, even when an item is prepared first among items ordered from the same destination, may delay delivery of the item until the other items are prepared.

For example, in operation 1910, the electronic device may obtain an expected completion time of an item currently being prepared among items ordered from the same target destination. For example, the electronic device may identify a target destination to which an item prepared at a current time point needs to be delivered and obtain expected completion times of other items ordered from the identified target destination. The electronic device may receive a cooking completion time point of food as an expected completion time from a cooking system of a kitchen and/or an order server.

In operation 1920, the electronic device may determine whether preparation of a next item is completed within a threshold delivery time from a current time point. In operation 1930, the electronic device, in response to an expected completion time of the next item exceeding the threshold delivery time, may determine a target destination and depart to the target destination to deliver items prepared so far.

In operation 1940, the electronic device may classify an item disposed on a serving tray into a delayed item in a serving waiting list. For example, the electronic device, in response to the expected completion time being within a threshold delivery time, may delay delivery of the item being on the serving tray until the preparation of the item currently being prepared is completed.

In operation 1950, the electronic device may deliver the delayed item together with a next item. The electronic device, in response to the preparation of the next item being completed within the expected completion time, may deliver the next item and the delayed item together to the target destination.

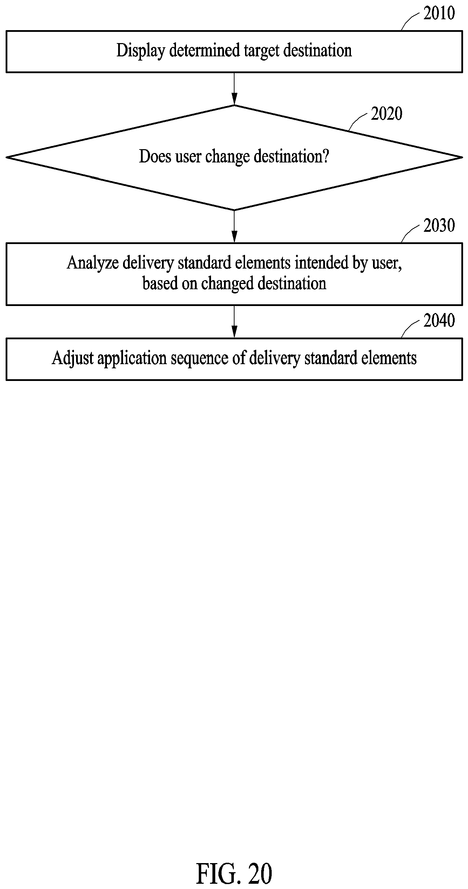

FIG. 20 is a diagram illustrating an example operation of adjusting an application sequence of delivery standard elements, according to various example embodiments.

An electronic device (e.g., the electronic device 101 of FIG. 1), when a user changes a destination, may change an application sequence of delivery standard elements for next delivery.

For example, in operation 2010, the electronic device may display a determined target destination. In operation 2020, the electronic device may determine whether the user changes a destination.

In operation 2030, the electronic device may analyze delivery standard elements intended by the user, based on the changed destination. For example, the electronic device, in response to a target destination being changed to one of candidate destinations by the user, may analyze delivery standard elements when determining the changed destination. For example, the electronic device, according to the delivery standard elements described with reference to FIG. 6, may extract delivery standard elements needed to preferentially select a candidate destination selected by the user.

In operation 2040, the electronic device may adjust an application sequence of delivery standard elements. For example, the electronic device, based on the analyzed delivery standard elements described above, may determine an application sequence of delivery standard elements.

Accordingly, the electronic device, by actively analyzing a user's intent and dynamically applying delivery standard elements complying with the user's intent, may provide a user-friendly delivery service.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device comprising:
a communication module, including communication circuitry, configured to receive one or more pieces of order data that indicate an item ordered by each customer;
a memory configured to store computer-executable instructions; and
a processor configured to execute the computer-executable instructions by accessing the memory,
wherein
the computer-executable instructions, when executed, configure the processor to control the electronic device to:
in response to an item being on a serving tray, identify a plurality of serving destinations corresponding to order data matched with the item among the one or more pieces of order data,
determine a target destination to which the item is to be provided among the plurality of serving destinations, based on time information related to delivery of an item at each of the serving destinations, and
present, to a user of the electronic device, the target destination and the remaining candidate destinations.

2. The electronic device of claim 1, wherein
the computer-executable instructions further configured the processor to control the electronic device to:
in response to receiving an input from a user for changing the target destination, change the target destination to a destination selected by the user among the remaining candidate destinations.

3. The electronic device of any of claims 1 to 2, further comprising:
an input module, including input circuitry, configured to receive an input from a customer,
wherein
the computer-executable instructions further configure the processor to control the electronic device to:
collect order data based on one or a combination of two or more of a point-of-sale (POS) device, an external device, and the input module.

4. The electronic device of any of claims 1 to 3, wherein
the computer-executable instructions further configure the processor to control the electronic device to:
identify an item by performing vision recognition on an image including the item disposed on the serving tray.

5. The electronic device of any of claims 1 to 4, wherein
the computer-executable instructions further configure the processor to control the electronic device to:
in response to serving waiting times, which are times elapsing from last serving to serving destinations, being different, determine, as the target destination, a serving destination having a longest serving waiting time among the serving destinations.

6. The electronic device of any of claims 1 to 5, wherein
the computer-executable instructions further configure the processor to control the electronic device to:
in response to available mealtimes of serving destinations being different, determine, as the target destination, a serving destination having a shortest available mealtime among the serving destinations.

7. The electronic device of any of claims 1 to 6, wherein
the computer-executable instructions further configure the processor to control the electronic device to:
in response to a serving destination having a serving waiting time outside a threshold serving interval among the serving destinations, determine, as the target destination, the serving destination having the serving waiting time outside the threshold serving interval.

8. The electronic device of any of claims 1 to 7, wherein
the computer-executable instructions further configure the processor to control the electronic device to:
determine, as the target destination, a serving destination corresponding to an earlier order time point between a first order time point when receiving an order for an item from a customer at a first serving destination among the plurality of serving destinations and a second order time point of a second serving destination, and
in response to time information related to delivery of an item to the plurality of serving destinations being the same, determine, as the target destination, a farthest serving destination from a waiting position of a serving robot configured to deliver the item among the serving destinations.

9. The electronic device of any of claims 1 to 8, wherein
the computer-executable instructions further configure the processor to control the electronic device to:
obtain an expected completion time of an item currently being prepared among items ordered from the same target destination, and
in response to the expected completion time being within a threshold delivery time, delay delivery of the item on the serving tray until the preparation of the item currently being prepared has been completed.

10. The electronic device of any of claims 1 to 9, wherein
the computer-executable instructions further configure the processor to control the electronic device to:
in response to the target destination being changed to one of the candidate destinations by the user, analyze delivery standard elements when determining a changed destination, and
based on the analyzed delivery standard elements, determine a sequence for applying the delivery standard elements.

11. The electronic device of any of claims 1 to 10, wherein
the computer-executable instructions further configure the processor to control the electronic device to:
output, on a display, on an entire order list on which a current serving situation is updated, serving information of the target destination to which the item is delivered.

12. The electronic device of any of claims 1 to 11, wherein
the serving information comprises:
one or a combination of two or more of an order history, an ordered quantity, a currently served item, a current serving quantity, a serving-completed item, or a serving-completed quantity.

13. The electronic device of any of claims 1 to 12, wherein
the computer-executable instructions further configure the processor to control the electronic device to:
in response to the item reaching the target destination, provide additional information to a customer who has ordered the item.

14. The electronic device of any of claims 1 to 13, wherein
the computer-executable instructions further configure the processor to control the electronic device to:
in response to completed delivery of the item to the target destination, provide briefing on a serving status of another item currently being prepared to a customer at the target destination.

15. A method implemented by a processor, the method comprising:
receiving one or more pieces of order data that indicate an item ordered by each customer;
in response to an item being on a serving tray, identifying a plurality of serving destinations corresponding to order data matched with the item among the one or more pieces of order data;
determining a target destination to which the item is to be provided among the plurality of serving destinations, based on time information related to delivery of an item at each of the serving destinations; and
presenting, to a user of the electronic device, the target destination and the remaining candidate destinations.
